# EUROPEAN PATENT APPLICATION

(11) **EP 3 196 775 A1**
(43) Date of publication of application: **26.07.2017**
(21) Application number: 14902052.1
(22) Date of filing: 18.09.2014
(51) Int. Cl.: G06F 17/30, G06Q 10/00

(54) **BAR CODE CLASSIFICATION SYSTEM**

(71) Applicant: Wu, Ching-Fang, Taichung City 408 (TW)
(72) Inventor: Wu, Ching-Fang, Taichung City 408 (TW)
(74) Representative: Lang, Christian
(86) International application number: PCT/CN2014/086777
(87) International publication number: WO 2016/041165

(57) **Abstract**

The bar code classification system includes a storage unit, a bar code generating unit, a bar code printing apparatus, and a processing unit. The storage unit is adapted for storing a commodity information of each of plural commodities. The bar code generating unit is adapted for generating a plurality of bar code patterns. The bar code printing apparatus is connected to the bar code generating unit and is adapted for printing the bar code patterns into bar codes. Each bar code is not directed to any specific one of the commodities. The bar codes are shown on the commodities. The processing unit inputs a bar code information of each of the commodities having the bar codes into the storage unit, and links each of the bar code informations to the commodity information of corresponding commodity. Thus, the bar codes can be used more flexibly.

## Description

### BACKGROUND OF THE INVENTION

### Field of the Invention

The present invention relates to a bar code classification system.

### Description of the Prior Art

Conventional operation systems of barcodes are regulated with some specific numbering systems. For example, the EAN-13 barcode is composed of GS1 prefix, manufacturer code, product code, and check digit. The commodity information is stored in the computer system in advance, and the commodity information is linked to a specific barcode. And then, the bar code is printed or attached on the commodity.

In other words, the barcode has to be printed on the right commodity which the barcode is directed to.

Thus, the barcode system can not be used flexibly.

### SUMMARY OF THE INVENTION

The main object of the present invention is to provide a bar code classification system whose bar codes are able to be used flexibly.

To achieve the above and other objects, a bar code classification system including a storage unit, a bar code generating unit, a bar code printing apparatus, and a processing unit.

The storage unit is adapted for storing a commodity information of each of plural commodities. The bar code generating unit is adapted for generating a plurality of bar code patterns. The bar code printing apparatus is connected to the bar code generating unit and is adapted for printing the bar code patterns into bar codes. Each bar code is not directed to any specific one of the commodities. The bar codes are shown on the commodities. The processing unit inputs a bar code information of each of the commodities having the bar codes into the storage unit and links each of the bar code informations to the commodity information of corresponding commodity.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

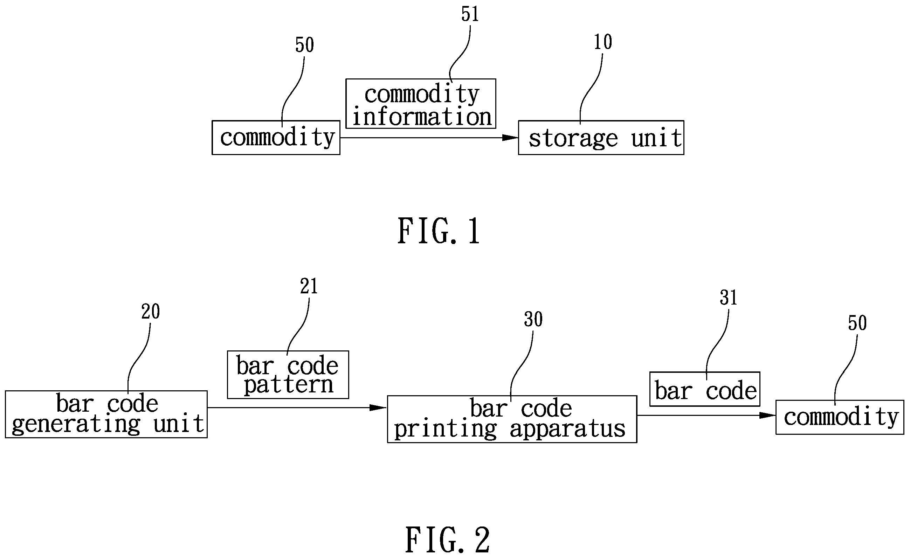

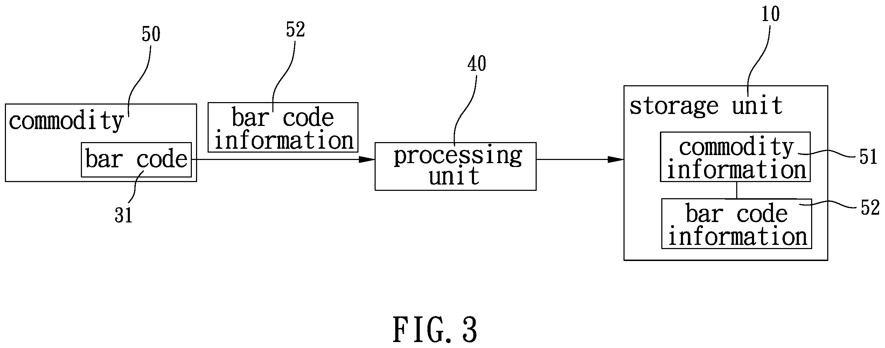

Figs. 1 to 3 are flow charts of the present invention.

### DETAILED DESCRIPTION OF THE PREFERRED EMBODIMENTS

Please refer to Fig. 1 to Fig. 3, the bar code classification system of the present invention includes a storage unit 10, a bar code generating unit 20, a bar code printing apparatus 30, and a processing unit 40.

The storage unit 10 is adapted for storing a commodity information 51 of each of plural commodities 50. The storage unit 10 can be a data-storing apparatus. Each commodity information 51 is stored in the storage unit 10 in advance. The commodity information 51 includes the name, the model, the serial number, and the specification of the commodity 50.

The bar code generating unit 20 is adapted for generating a plurality of bar code patterns 51 which are different from each other or the same. Specifically, the bar code generating unit 20 can be a computer apparatus. When the bar codes patterns are different from each other, they can be generated randomly or non-randomly.

The bar code printing apparatus 30 is connected with the bar code generating unit 20 by wired, wireless, or other connection. The bar code patterns 31 are printed or shown on the commodities 50. In the present embodiment, the bar code printing apparatus 30 can be a continuous printing apparatus to continuously print out the bar codes which are different from each other or the same. The bar codes 31 can be directly printed on the commodities 50 or printed as labels attached on the commodities 50. At this time, the bar codes 31 are not directed to the commodity informations 51 yet.

The processing unit 40 inputs a bar code information 52 of the commodity 50 having the bar code 31 into the storage unit 10, and links the bar code information 52 to the commodity information 51 of the corresponding commodity 50. Specifically, the processing unit 40 can include a bar code reading apparatus to read the bar code information 52 of the bar code 31 on the commodity 50. the bar code information 52 is mated with the corresponding commodity information 51 stored in the storage unit 10 by human or other means.

Practically, the commodity informations 51 are stored in the storage unit 10 in advance. And then, the bar code generating unit 20 generates bar code patterns 21 and sends them to the bar code printing apparatus 30. The bar code printing apparatus 30 prints the bar codes 31 on the commodities 50. At this time, the bar codes 31 are not directly to the commodity informations yet. Thereafter, the processing unit 40 reads the bar code informations 52 and mates them with the commodity infromations 51 stored in the storage unit 10.

In conclusion, it's not necessary to mate the bar codes and the commodity informations in advance in the present invention. On the contrary, they are mated before shipment. Thus, it is advantageous in the followings.
1. The bar codes can be used flexibly.
2. The same bar code can be directed to different commodities. For example, the existed commodity is replaced by another new model.
3. Different bar codes are directed to the same commodity. For example, the package of a commodity is changed.

## Claims

1. A bar code classification system, including:
a storage unit (10), adapted for storing a commodity information (51) of each of plural commodities (50);
a bar code generating unit (20), adapted for generating a plurality of bar code patterns (21);
a bar code printing apparatus (30), connected to the bar code generating unit (20), adapted for printing the bar code patterns (21) into bar codes (31), each bar code (31) being not directed to any specific one of the commodities (50), the bar codes (31) being shown on the commodities (50);
a processing unit (40), inputting a bar code information (52) of each of the commodities (50) having the bar codes (31) into the storage unit (10), and linking each of the bar code informations (52) to the commodity information (51) of corresponding commodity (50).

2. The bar code classification system of claim 1, wherein the bar code printing apparatus (30) is a continuous printing apparatus.

3. The bar code classification system of claim 1, wherein each of the commodity information (51) includes a name, a model, a serial number, and a specification of the commodity (50).

4. The bar code classification system of claim 1, wherein the bar codes (31) are different from each other.

5. The bar code classification system of claim 4, wherein the bar codes (31) are directed to the same commodity.

6. The bar code classification system of claim 1, wherein the bar codes (31) are the same.

7. The bar code classification system of claim 6, wherein the bar codes (31) are directed to different commodities.
